# EUROPEAN PATENT APPLICATION

(11) **EP 3 594 146 A1**
(43) Date of publication of application: **15.01.2020**
(21) Application number: 18745076.2
(22) Date of filing: 30.01.2018
(51) Int. Cl.: B65D 81/07, B64D 1/14

(54) **PACKAGING IMPLEMENT**

(30) Priority: 30.01.2017 JP 2017014910
(71) Applicant: Takemoto, Naofumi, Tokyo 105-0011 (JP)
(72) Inventor: Takemoto, Naofumi, Tokyo 105-0011 (JP)
(74) Representative: Maiwald Patent- und Rechtsanwaltsgesellschaft mbH
(86) International application number: PCT/JP2018/003053
(87) International publication number: WO 2018/139678

(57) **Abstract**

Provided is a packing tool of holding an item such that the item is sandwiched between a pair of films, the packing tool includes a container, at least one pair of films that are stretchable, and a fixing portion of fixing the at least one pair of films that face with each other and are in a stretched state in internal space of the container, and the container includes a base material of a foamed synthetic resin provided with the internal space and a coating layer of a polyurea resin that covers an outer surface of the base material and an inner surface in the internal space.

## Description

### BACKGROUND

### 1. TECHNICAL FIELD

The present invention relates to a packing tool.

### 2. RELATED ART

Conventionally, a packing tool is known that can protect an item to be packed from an impact by sandwiching the item to be packed between elastic films and supporting the item to be packed in a box (for example, please refer to Patent Document 1). Also, as a related art, a thermal insulation box is known in which a coating of a polyurea resin is applied on an outer surface of the thermal insulation box (for example, please refer to Patent Document 2).
[Patent Document 1] Japanese Patent Application Publication No. 2005-247412
[Patent Document 2] Japanese Patent Application Publication No. 8-282743

For example, when the packing tool is fallen on a ground and delivered using an unmanned aerial vehicle, it is preferable to further enhance an impact resistance performance of the packing tool.

In a first aspect of the present invention, the packing tool is provided. The packing tool may include a container. The packing tool may include at least one pair of films. At least one pair of films may be stretchable. The packing tool may include a fixing portion. The fixing portion may fix at least one pair of films with the at least one pair of films facing each other and being in a stretched state in internal space of the container. The packing tool may hold the item to be packed such that the item to be packed is sandwiched between a pair of films. The container may include a base material. The base material may be formed of a foamed synthetic resin. The container may include a coating layer. The coating layer may be formed of a polyurea resin. The base material of the foamed synthetic resin may be provided with internal space. The coating layer of the polyurea resin may cover an outer surface of the base material and an inner surface in the internal space.

The container may have a rugby ball shape.

The first container half and the second container half may be combined so that the container forms the internal space. The first container half and the second container half may be combined by abutting open ends of the first container half and the second container half. A pair of films may include a first film and a second film. The first film and the second film may be fixed in a stretched state along the open ends of the first container half and the second container half.

The container has at one end a parachute portion. The parachute portion may reduce a falling speed of the packing tool when the packing tool falls from a sky.

The base material of the other end positioned opposite to one end of the container may be thicker than the base material of the one end.

The other end positioned opposite to one end of the container may have a tapered shape.

The summary clause does not necessarily describe all necessary features of the embodiments of the present invention. The present invention may also be a sub-combination of the features described above.

### BRIEF DESCRIPTION OF THE DRAWINGS

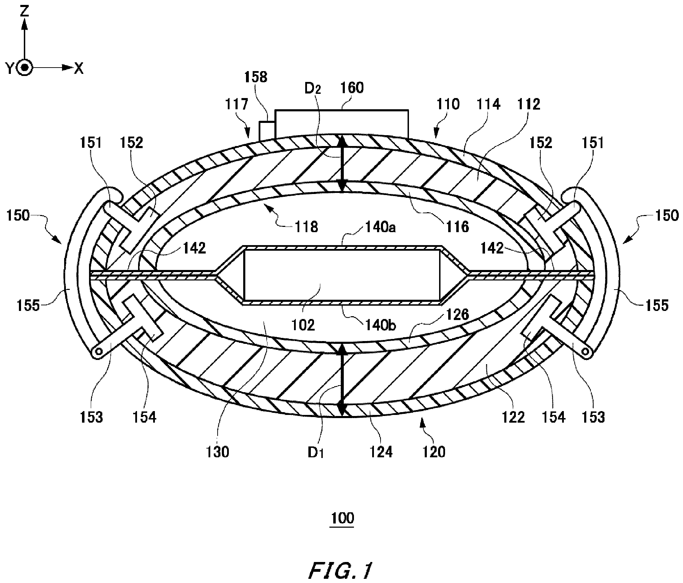

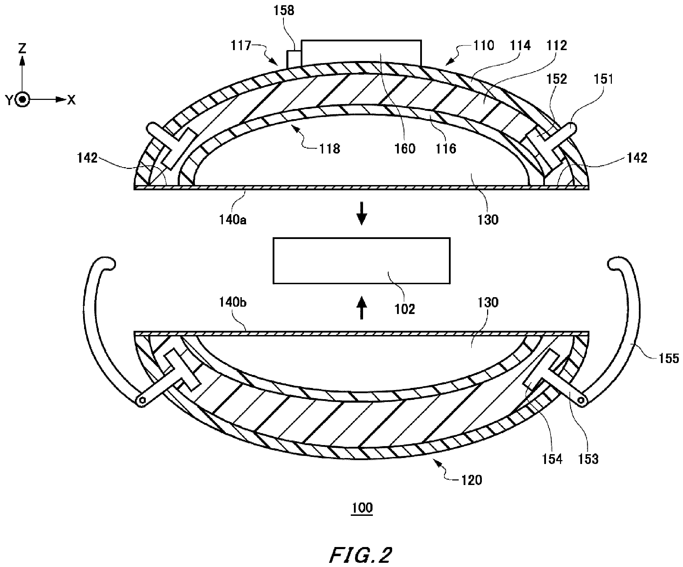

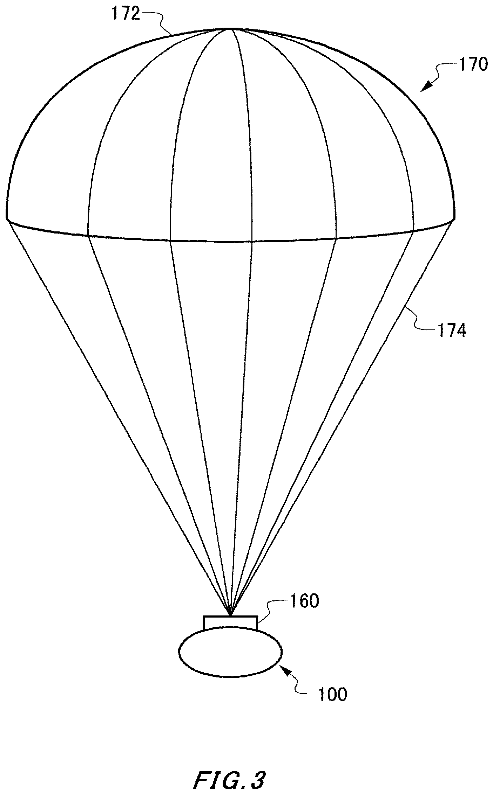

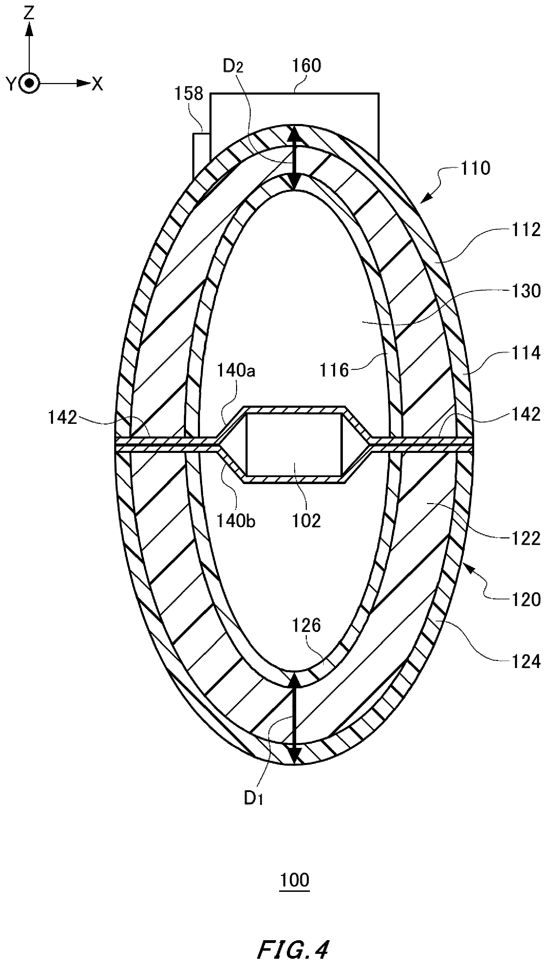

Fig. 1 is a cross-sectional view illustrating an example of a packing tool 100 according to a first embodiment of the present invention. Fig. 2 illustrates an opened state of the packing tool 100. Fig. 3 illustrates the packing tool 100 with a parachute portion 170 in the opened state. Fig. 4 illustrates another example of the packing tool 100.

### DESCRIPTION OF EXEMPLARY EMBODIMENTS

Hereinafter, the present invention is described through the embodiments of the invention. However, the following embodiments do not limit the invention according to the claims. Also, all the combinations of the features described in the embodiment(s) are not necessarily essential for means provided by aspects of the invention.

Fig. 1 is a cross-sectional view illustrating an example of the packing tool 100 according to the first embodiment of the present invention. Fig. 2 illustrates the opened state of the packing tool 100. The packing tool 100 packs an item to be packed 102. In particular, the packing tool 100 may be transported by air, fallen from a sky, and delivered to a destination. The item to be packed 102 is suitable for the transportation by air of pharmaceutical products such as various vaccines, but the present invention is not limited thereto.

The packing tool 100 includes a first container half 110, a second container half 120, and at least one pair of films 140. Containers (110, 120) are formed by abutting open ends of the first container half 110 and the second container half 120 and closing the first container half 110 and the second container half 120. In the present example, the first container half 110 and the second container half 120 are combined to form internal space 130. Note that, the first container half 110 and the second container half 120 may not necessarily have the same size.

The containers (110, 120) of the present example have a spheroid shape (prolate spheroid shape) in which a long axis serves as a rotation axis as a whole. That is, the containers (110, 120) have a rugby ball shape. The containers (110, 120) having a rugby ball shape stabilize a fall posture of the packing tool 100 being transported by air and fallen freely at the time of delivery, and is less affected by a wind. Although a size of the containers (110, 120) is not limited, a length of a long axis may be 0.5m or more and 10m or less. In the present example, the containers (110, 120) may be divided into the first container half 110 and the second container half 120 on a separation plane along the long axis.

The first container half 110 of the containers (110, 120) of the present example includes a base material 112, an outer surface coating layer 114, and an inner surface coating layer 116. The base material 112 is formed of a foamed synthetic resin.

As an example, a synthetic resin forming the base material 112 is a polymer compound. As a more specific example, the synthetic resin forming the base material 112 is formed of one or more materials selected from polystyrene, polyethylene, polypropylene, and polyurethane. The foamed synthetic resin refers to the resin in which fine bubbles are dispersed in the synthetic resin. In one embodiment, the base material 112 is formed of coolite (foamed polystyrene).

The outer surface coating layer 114 and the inner surface coating layer 116 are coating layers formed of polyurea resin. The outer surface coating layer 114 covers the outer surface 117 of the base material 112. The inner surface coating layer 116 covers the inner surface 118 of the base material 112. The inner surface 118 refers to a surface exposed to the internal space 130. Coating layers (114, 116) may be formed on an entire surface of the base material 112. In examples illustrated in Fig. 1 and Fig. 2, although the coating layers (114, 116) do not cover the open end, the coating layers (114, 116) may cover, unlike Fig. 1 and Fig. 2, the outer surface 117 and the inner surface 118 of the base material 112 as well as the open end. The open end refers to a surface between the outer surface 117 and the inner surface 118 of the base material 112.

The coating layers (114, 116) are thinner than the base material 112. As an example, a thickness of the base material 112 is 3cm or more and a thickness of the coating layers (114, 116) is mm or less.

The second container half 120 includes a base material 122, an outer surface coating layer 124, and an inner surface coating layer 126. The structures of the above may be respectively similar to the structures of the base material 112, the outer surface coating layer 114, and the inner surface coating layer 116 in the first container half 110. Therefore, the repeated description is omitted.

A pair of films 140 includes the first film 140a and the second film 140b. The first film 140a is fixed in a stretched state along the open end of the first container half 110. The second film 140b is fixed in a stretched state along the open end of the second container half 120.

The first film 140a and the second film 140b are fixed to face each other in the stretched state in the internal space 130 formed by the containers (110, 120). The packing tool 100 includes the fixing portion 142. The first film 140a and the second film 140b are respectively fixed to the open ends of the containers (110, 120) by the fixing portion 142. The fixing portion 142 may be an adhesive and may sandwich and fix the first film 140a and the second film 140b. A structure of the fixing portion 142 is not limited. The plurality of pairs of films 140 may be stretched parallel to one another.

The first film 140a and the second film 140b are stretchable elastic films. The first film 140a and the second film 140b are made of, for example, plastic films such as polyurethane, polyethylene, and polypropylene. In an example, a thickness of the first film 140a and the second film 140b may be 80µm or more and 100µm or less.

The packing tool 100 of the present example holds the item to be packed 102 such that the item to be packed 102 is sandwiched between the pair of films 140. The item to be packed 102 may be sandwiched between the pair of films 140 in the state further wrapped up with a buffer material. The buffer material may restrict a movement of the item to be packed 102 between the pair of films 140. The packing tool 100 may include a coupling portion 150. The coupling portion 150 couples the first container half 110 and the second container half 120. The coupling portion 150 of the present example includes a protruding portion 151, a support portion 153, and a clasp portion 155.

The protruding portion 151 has one end that is embedded in the base material 112 of the first container half 110 and the other end that protrudes from the surface. The one end of the protruding portion 151 of the present example has a bent portion 152 that is bent in the base material 112, and thus, the protruding portion 151 is less likely to come off. The support portion 153 has one end that is embedded in the base material 122 of the second container half 120 and the other end that is rotatably connected with the clasp portion 155. The clasp portion 155 is fixed by being fitted with the protruding portion 151. The one end of the support portion 153 has the bent portion 154 that is bent in the base material 122, and thus, the support portion 153 is less likely to come off.

However, the coupling portion 150 is not particularly limited as long as it couples the first container half 110 and the second container half 120. Further, although Fig. 2 illustrates that the first container half 110 and the second container half 120 are completely separated from each other, the present invention is not limited to this case, and the first container half 110 and the second container half 120 may be connected openably and closably by use of a hinge portion. In this case, with the closed state, the first container half 110 and the second container half 120 may be fixed such that the closed state of the first container half 110 and the second container half 120 by the coupling portion 150 is maintained.

The containers (110, 120) have at one end a parachute portion that reduces a falling speed of the packing tool 100 when the packing tool 100 falls from a sky. In Fig. 1 and Fig. 2, a parachute storage portion 160 is attached to one end along a short axis of the spheroid. The base material 122 of the other end positioned opposite to one end of the containers (110, 120) may be thicker than the base material 112 of one end. The outer surface coating layer 124 of the other end may be thicker than the outer surface coating layer 114 of one end. With respect to a thickness of the entire packing tool 100, a thickness D1 of the other end may be larger than a thickness D2 of one end including the parachute portion.

When the parachute portion is opened and thus the packing tool 100 falls, the other end opposite to the parachute portion collides with a ground surface. Accordingly, by increasing a thickness of the base material 122 at a side of the other end that collides with the ground surface than a thickness of the base material 112 of one end side, it is possible to enhance an impact resistance.

Further, a GPS transmitter 158 may be provided to the packing tool 100. A position where the GPS transmitter 158 is provided is not particularly limited. In the present example, the GPS transmitter 158 is provided adjacent to a parachute housing portion 160. The GPS transmitter 158 uses a GPS (Global Positioning System) to obtain positional information on a current position of the packing tool 100. The positional information may be GPS location information. Then, the GPS transmitter 158 transmits the thus obtained positional information via wireless communication. The GPS transmitter 158 may transmit positional information using radio waves of a mobile phone company or the like.

The GPS transmitter 158 may be an automatic tracking type GPS transmitter that automatically obtains positional information and automatically transmits the positional information. On the other hand, when the GPS transmitter 158 receives an instruction based on a command from a server side, the GPS transmitter 158 may transmit current positional information. The GPS transmitter 158 may be configured to transmit the positional information, when an impact on landing is detected by an acceleration sensor or the like. In this case, by transmitting the positional information transmitted from the GPS transmitter 158, a delivery company can know that the packing tool 100 is safely landed.

The server obtains and uses the transmitted GPS location information. By accessing the server, a delivery company can know a deliver source, a deliver destination, and/or a current position of the item to be packed. Further, when the parachute portion is opened and thus, the packing tool 100 falls, a falling destination of packaging tool 100 may be shifted due to an influence of a wind. In this case also, since the position of the packing tool 100 can be grasped by use of the GPS transmitter 158, a luggage is not lost. However, unlike the present example, the packing tool 100 may not include the GPS transmitter 158.

Fig. 3 is a drawing illustrating the packing tool 100 in a state where the parachute portion 170 is opened. The parachute portion 170 is housed in the parachute storage portion 160. Triggered by an elapse of a predetermined time or reaching to a predetermined speed after a start of a fall of the packing tool 100, the parachute portion 170 may move out of the parachute storage portion 160 and open automatically. The parachute portion 170 includes an umbrella body 172 and a plurality of string portions 174. The string portion 174 has one end coupled to the parachute storage portion 160 and the other end coupled to the umbrella body 172.

In the present example, the base material (112, 122) is formed of a foamed synthetic resin and thus, is very lightweight. Further, since the coating layers (114, 116, 124, 126) are formed of a polyurea resin, the coating layers (114, 116, 124, 126) have high strength, excellent water resistance, and excellent impact resistance. For this reason, coating a surface of the base materials (112, 122) with coating layers (114, 116, 124, 126) can provide the ultra-lightweight packing tool 100 excellent in strength, water resistance, and impact resistance.

Since the packing tool 100 of the present example is very lightweight, the packing tool 100 can be easily transported and stored, and costs such as energy required for transportation can be reduced. Therefore, a contribution to environmental measures is possible.

Since the packing tool 100 of the present example is very lightweight, a burden imposed on the parachute portion 170 is very small compared to a case of the packing tool made of metal. Therefore, since a size of the parachute portion 170 can be made small compared to a case of the packing tool made of metal, a space where the parachute storage portion 160 is installed can also be made small.

An outer shape of the packing tool 100 of the present example is a spheroid. Therefore, the packing tool 100 can be stabilized in a fall posture when being fallen freely at the time of delivery and can be less likely to receive an influence of a wind. The packing tool 100 is less likely to receive an influence of a wind at least until the parachute portion 170 is opened.

Fig. 4 illustrates another example of the packing tool 100. In the packing tool 100 illustrated in Fig. 1 and Fig. 2, the containers (110, 120) are divided into the first container half 110 and the second container half 120 on the separation plane along the long axis of the spheroid. On the other hand, in the packing tool 100 of the present example, the containers (110, 120) are divided into the first container half 110 and the second container half 120 on the separation plane along the short axis of the spheroid. Note that, in Fig. 4, the coupling portion 150 is not illustrated for the sake of simplicity of the description. The present example may also include the coupling portion 150 illustrated in Fig. 1 and Fig. 2.

In the present example, the parachute storage portion 160 is provided to one end of the containers (110, 120). In the present example, the containers (110, 120) have, at one end, the parachute portion 170 that reduces the falling speed of the packing tool 100 when the packing tool 100 falls from the sky. The base material 122 of the other end positioned opposite to one end of the containers (110, 120) is thicker than the base material 112 of one end. The outer surface coating layer 124 of the other end may be thicker than the outer surface coating layer 114 of one end. With respect to the thickness of the entire packing tool 100, the thickness D1 of the other end may be larger than the thickness D2 of one end including the parachute portion 170.

According to the present example, the parachute portion 170 is provided at one end of the containers (110, 120) along the long axis Thus, the other end positioned opposite to one end of the containers (110, 120) has a tapered shape. Therefore, even after the parachute portion 170 is opened, since the packing tool 100 can fall with the posture in which the other end having the tapered shape faces vertically, the influence of the wind can be further reduced.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

### EXPLANATION OF REFERENCES

100 packing tool, 102 item to be packed , 110 first container half, 112 base material, 114 outer surface coating layer, 116 inner surface coating layer, 117 outer surface, 118 inner surface, 120 second container half, 122 base material, 124 outer surface coating layer, 126 inner surface coating layer, 130 internal space, 140 film, 142 fixing portion, 150 coupling portion, 151 protruding portion, 152 bent portion, 153 support portion, 154 bent portion, 155 clasp portion, 158 GPS transmitter, 160 parachute storage portion, 170 parachute portion, 172 umbrella body, 174 string portion

## Claims

1. A packing tool of holding an item, comprising:
a container;
at least one pair of films that are stretchable and sandwich the item;
a fixing portion of fixing the at least one pair of films that face with each other and are in a stretched state in internal space of the container;
wherein the container includes a base material of a foamed synthetic resin provided with the internal space and a coating layer of a polyurea resin that covers an outer surface of the base material and an inner surface in the internal space.

2. The packing tool according to claim 1, wherein
the container has a rugby ball shape.

3. The packing tool according to claim 1 or 2, wherein
a first container half and a second container half are combined by closely facing open ends of the first container half and the second container half to form a closed space that is the internal space; and
the pair of films includes a first film and a second film that are respectively fixed while being stretched along open ends of the first container half and the second container half.

4. The packing tool according to any one of claim 1 to 3, wherein
the container has at one end a parachute portion that reduces a falling speed of the packing tool when the packing tool falls from a sky.

5. The packing tool according to claim 4, wherein
the base material of the other end positioned opposite to one end of the container is thicker than the base material of one end.

6. The packing tool according to claim 4 or 5, wherein
the other end positioned opposite to one end of the container has a tapered shape.

## Amended claims

### Amended claims under Art. 19.1 PCT

1. A packing tool of holding an item, comprising:
a container;
at least one pair of films that are stretchable and sandwich the item;
a fixing portion of fixing the at least one pair of films that face with each other and are in a stretched state in internal space of the container;
wherein the container includes a base material of a foamed synthetic resin provided with the internal space and a coating layer of a polyurea resin that covers an outer surface of the base material and an inner surface in the internal space.

2. The packing tool according to claim 1, wherein
the container has a rugby ball shape.

3. The packing tool according to claim 1 or 2, wherein
a first container half and a second container half are combined by closely facing open ends of the first container half and the second container half to form a closed space that is the internal space; and
the pair of films includes a first film and a second film that are respectively fixed while being stretched along open ends of the first container half and the second container half.

4. The packing tool according to any one of claims 1 to 3, wherein
the container has at one end a parachute portion that reduces a falling speed of the packing tool when the packing tool falls from a sky.

5. The packing tool according to claim 4, wherein
the base material of the other end positioned opposite to one end of the container is thicker than the base material of one end.

6. The packing tool according to claim 4 or 5, wherein
the other end positioned opposite to one end of the container has a tapered shape.

7. (added) The packing tool according to claim 3, wherein
the container includes a rugby ball shape having a long axis direction and a short axis direction; and
the open ends of the first container half and the second container half are closely faced each other on a separation plane along the short axis direction.

8. (added) The packing tool according to any one of claims 1 to 7, further comprising:
a sensor of detecting an impact when a falling packing tool lands; and
a transmitter that transmits positional information when the sensor detects the impact caused by a landing.
